# EUROPÄISCHE PATENTANMELDUNG

(11) **EP 2 492 038 A2**
(43) Veröffentlichungstag der Anmeldung: **29.08.2012**
(21) Anmeldenummer: 12000926.1
(22) Anmeldetag: 13.02.2012
(51) Int. Cl.: B23F 23/12

(54) **Verfahren zum Vermessen und Prüfen eines Werkstückes und Verzahnmaschine**

(30) Priorität: 22.02.2011 DE 102011011946
(71) Anmelder: LIEBHERR-VERZAHNTECHNIK GmbH, 87437 Kempten (DE)
(72) Erfinder: Winkel, Oliver, Dr., 87435 Kempten (DE)
(74) Vertreter: Laufhütte, Dieter

(57) **Zusammenfassung**

Die vorliegende Erfindung betrifft ein Verfahren zum Vermessen und Prüfen eines zu einer Zahnradpaarung gehörigen Werkstückes, wobei das Verfahren auf einer das Werkstück produzierenden Verzahnmaschine ausgeführt wird und die Zahnradpaarung entweder ein Schneckengetriebe oder eine Zylinderradpaarung ist, wobei ein am Arbeitskopf, insbesondere Fräskopf, montiertes Prüfgegenstück in Richtung des in der Werkstückaufnahme des Maschinentisches eingespannten Werkstückes verfahren wird, bis die Zahnradpaarung in Eingriff ist und der entsprechende Arbeitsachsabstand erreicht ist, das Werkstück über die Antriebsbewegung des Prüfgegenstückes der Zahnradpaarung angetrieben wird, die Drehposition des zu vermessenden Werkstücke aufgezeichnet wird und die erfaßte Ist-Position mit einer Referenzposition verglichen wird und wenigstens ein die Wälzabweichung des Werkstückes charakterisierender Wert unter Berücksichtigung des angestellten Vergleichs berechnet wird.

## Beschreibung

Die Erfindung betrifft ein Verfahren zum Vermessen und zum Prüfen eines zu einer Zahnradpaarung gehörigen Werkstückes.

Unter Zahnradpaaren ist die Kombination beliebiger Zahnräder mit ihren passenden Gegenrädern zu verstehen. Darunter fallen beispielsweise Schnecke und Schneckenrad oder auch zwei oder mehrere zueinander passende Zylinder- bzw. Stirnräder. Die Laufeigenschaften einer Verzahnung werden durch Form und Maßabweichungen der am Eingriff beteiligten Partner bestimmt. Zur Beurteilung des Übertragungsverhaltens werden deshalb am gefertigten Zahnrad Messungen durchgeführt, mit denen einzelne Arten von Abweichungen ermittelt werden können.

Bei Schneckengetrieben erfolgt die Überprüfung häufig in Form einer Wälzprüfung auf einem separaten Meßgerät. Zur Überprüfung der Schneckenräder werden diese gemäß der Standardisierung DIN3960, VDI/VDE 2608 und VDI/VDE 2609 einer Einflankenwälzprüfung unterzogen. Hierbei wird das gefertigte Schneckenrad mit seiner Schnecke/Prüfschnecke gepaart und die gemeinsame Auswirkung ihrer Einzelabweichungen wird auf den Wälzvorgang als Wälzabweichung ermittelt. Nachteilig an dem beschriebenen Verfahren ist, dass die hergestellten Zahnräder zuerst aus der produzierenden Verzahnmaschine entnommen und in eine separate Meßvorrichtung eingebracht werden müssen. Werden durch die separate Meßvorrichtung unzulässige Maßabweichungen entdeckt, so erfolgt die aufwendige Rückgabe des Werkstückes an die Verzahnmaschine, um die entdeckten Abweichungen durch eine Nachbearbeitung zu korrigieren.

Insbesondere bei der Serienproduktion von Zahnrädern ist ein häufiges Umladen des herzustellenden Werkstückes zwischen Verzahnmaschine und Meßvorrichtung nicht akzeptabel. Auch erfolgt die Rückmeldung der festgestellten Mängel an die Verzahnmaschine üblicherweise nicht automatisch. Mögliche Korrekturschritte müssen selbständig ausgearbeitet und manuell an der Verzahnmaschine programmiert werden.

Aufgabe der vorliegenden Erfindung ist es daher, ein vergleichbares Meßverfahren in eine produzierende Verzahnmaschine zu importieren.

Diese Aufgabe wird durch ein Verfahren gemäß den Merkmalen des Anspruchs 1 sowie durch ein Verfahren gemäß den Merkmalen des Anspruchs 2 gelöst.

Das Verfahren eignet sich zum Vermessen eines zu einer Zahnradpaarung gehörigen Werkstückes, wobei das Verfahren auf einer das Werkstück produzierenden Verzahnmaschine ausgeführt wird. Eine separate Meßvorrichtung ist demnach nicht erforderlich. Die Zahnradpaarung ist entweder ein Schneckengetriebe mit einem in eine Schnecke eingreifenden Schneckenrad oder eine Zylinderradpaarung, die aus zwei ineinandergreifenden Zylinderzahnrädern bzw. Stirnrädern besteht.

Gemäß dem erfindungsgemäßen Verfahren nach dem Wortlaut des Anspruchs 1 wird in einem ersten Verfahrensschritt ein am Arbeitskopf, insbesondere Fräskopf, der Verzahnmaschine montiertes Prüfgegenstück in Richtung des in der Werkstückaufnahme des Maschinentisches eingespannten Werkstückes verfahren, bis sich die aus Prüfgegenstück und Werkstück gebildete Zahnradpaarung im Eingriff befindet und idealerweise der entsprechende Arbeitsachsabstand erreicht ist. Die Zustellung kann ebenfalls durch Verfahren der Werkzeugaufnahme in Richtung des Arbeitskopfes erfolgen.

Bevorzugt wird ein in der Werkstückaufnahme befindliches Schneckenrad durch eine am Arbeitskopf, insbesondere am Fräskopf, der Verzahnmaschine montierte Prüfschnecke vermessen.

In einem nächsten Verfahrensschritt wird das eingespannte Werkstück über die Antriebsbewegung des Prüfgegenstückes angetrieben. Beispielsweise erzeugt die am Arbeitskopf rotierende Prüfschnecke eine Rotationsbewegung des in der Werkstückaufnahme eingespannten Schneckenrades. Je nach Drehrichtung des Prüfgegenstückes befindet sich entweder die Rechts- oder die Linksflanke der Zahnradpaarung im gegenseitigen Eingriffspunkt. Die Drehachse des Prüfgegenstückes ist vorzugsweise annähernd rechtwinklig zur Drehachse des Werkstückes.

Die jeweilige Drehposition des zu vermessenden Werkstückes wird über einen bestimmten Zeitraum hinweg aufgezeichnet und einer nachfolgenden Auswertung, insbesondere einem Vergleich der Werkstückdrehung in Relation zur Prüfschneckendrehung, zur Verfügung gestellt. Beispielsweise erfolgt die Aufzeichnung über wenigstens eine vollständige Umdrehung des Prüflings.

In der nachfolgenden Auswertung erfolgt der Vergleich der tatsächlich erfaßten Ist-Position mit einer entsprechenden Referenzposition, wobei auf Grundlage des angestellten Vergleichs wenigstens ein die Wälzabweichung des Werkstückes charakterisierender Wert berechnet wird. Die zum Vergleich herangezogene Referenzposition ist bekannt und entspricht vorzugsweise einer vergleichbaren Zahnradpaarung mit nahezu idealer Form und Maßabweichung der am Eingriff beteiligten Partner. Die ermittelten Werte geben Aufschluß über mögliche kinematische Fehler der Zahnradpaarung, insbesondere des Werkstückes, unter realen Betriebsverhältnissen.

Das voranstehend beschriebene erfindungsgemäße Verfahren ist vorzugsweise auf einer Verzahnmaschine mit Direktantrieb im Arbeitskopf, insbesondere Fräskopf, und einem Direktantrieb im Tischantrieb ausführbar. Denkbar ist es aber auch, das erfindungsgemäße Verfahren auf einer Verzahnmaschine mit einem Getriebemaschinentisch auszuführen. Das erfindungsgemäße Verfahren ist gleichermaßen auf Verzahnmaschinen mit vertikal oder horizontal orientierter Werkstückachse ausführbar.

Eine alternative Ausführung des erfindungsgemäßen Verfahrens ist Gegenstand des nebengeordneten Anspruchs 2. Dieses Verfahren ist insbesondere zur Ausführung auf einer Verzahnmaschine mit herkömmlichen Achsantrieben geeignet. Die Montage des Prüfgegenstückes erfolgt entweder am Arbeitsdorn, insbesondere dem Fräsdorn der Verzahnmaschine, oder an einem zusätzlich angeordneten Sonderdorn.

Analog zum Verfahren gemäß Anspruch 1 wird das Prüfgegenstück mit dem in der Werkstückaufnahme eingespannten Werkstück in Eingriff gebracht, bis der entsprechende Arbeitsachsabstand zwischen dem gebildeten Zahnradpaar erreicht ist und das eingespannte Werkstück durch die Antriebsdrehbewegung des Prüfgegenstückes in Rotation versetzt wird.

Der Unterschied besteht nun darin, dass anstatt der Ist-Drehposition des Werkstückes die Verlagerung des Prüfgegenstückes relativ zum Werkstück aufgezeichnet und für die nachfolgende Berechnung wenigstens eines die Wälzabweichung des Werkstückes charakterisierenden Wertes herangezogen wird. Die Verlagerung wird durch Abweichungen in der Drehübertragung zwischen Werkstück und Prüfgegenstück hervorgerufen. Die Auswertung der Verlagerung dient zur Ermittlung der Wälzabweichung der aus Werkstück und Prüfgegenstück gebildeten Zahnradpaarung. Die Verlagerung kann entweder direkt gemessen oder indirekt aus geeigneten Messgrößen abgeleitet werden.

Bevorzugt erfolgt auf Grundlage der aufgezeichneten Verlagerung des Prüfgegenstückes relativ zum Werkstück in Verbindung mit dem bekannten Übersetzungsverhältnis des Zahnradpaares eine Berechnung der Werte für die Einflankenwälzprüfung.

Das vorgestellte Verfahren ist insbesondere für Verzahnmaschinen geeignet, die einen großen Maschinentisch mit hohem Trägheitsmoment umfassen.

Die Verlagerung des Prüfgegenstückes relativ zum Werkstück kann direkt mit Hilfe eines Wegaufnehmers bestimmt werden. Als besonders geeignet erweisen sich ein direkter Messtaster oder ein induktiver Mess-Sensor.

Alternativ kann die Verlagerung indirekt aus ein oder mehreren geeigneten Messgrößen abgeleitet werden. Die genannte Abweichungen der Drehübertragung erzeugen indirekt eine Änderung der angreifenden Kraft auf das Prüfgegenstück in einer bestimmten Richtung, d.h. entweder vor- oder nacheilend. Vorzugsweise erfährt das Prüfgegenstück eine Änderung der aufgebrachten Kraft, die parallel zur Achsrichtung des Prüfgegenstandes wirkt. Demnach kann anhand der gemessenen Kraftänderung die benötigte Verlagerung bestimmt werden und Auskunft über die Übertragungsgleichförmigkeit der Zahnradpaarung geben.

Die Messung der Kraftänderung erfolgt zweckmäßig über eine am Sonderdorn befestigte Kraftmeßdose, insbesondere Druckmeßdose. Das Gegenprüfstück wird hierbei zweckmäßig federbelastet in Eingriff mit dem zu vermessenden Werkstück gebracht, so dass hervorgerufene Kraftänderungen der in Federrichtung wirkenden Kraft durch die Druckmeßdose erfaßbar sind.

Ist das Prüfgegenstück am Arbeitsdorn der Verzahnmaschine montiert, wird die auf das Prüfgegenstück einwirkende Kraft alternativ anhand des erforderlichen Lageregelmomentes der entsprechenden Achse des Arbeitsdorns bestimmt. Die angesprochene Lageregelung der Verzahnmaschine ist üblicherweise notwendig, um eine entsprechende Maschinenachse in ihrer Lage relativ zur Werkstückmitte zu regeln. Anhand des regelbedingt aufgewendeten Momentes des zuständigen Achsantriebs kann eine Aussage über die anliegenden Kräfte bzw. die Kraftrichtungen in Achsrichtung des Prüfgegenstückes getroffen werden. Insbesondere ergeben sich Informationen über Teilungsschwankungen.

Grundsätzlich ist eine Kombination der beiden vorgestellten erfindungsgemäßen Verfahren zulässig, um eine redundante Meßprozedur sowie Meßwertauswertung zu bezwecken.

Es kann zweckmäßig sein, vor der Verfahrensdurchführung in einem ergänzenden Verfahrensschritt das montierte Prüfgegenstück mit seinem Außendurchmesser gegen eine vorgesehene Referenzfläche der Verzahnmaschine anzufahren. Thermische Maschineneinflüsse, die eine exakte Positionsbestimmung des Prüfgegenstückes verfälschen, können durch das Anfahren der Referenzfläche kompensiert werden. Möglich ist auch eine Kompensation der thermischen Einflüsse durch den Einsatz eines Prüfbundes am Prüfgegenstück. Eine ebenso denkbare Alternative wäre die Verwendung eines Messtasters.

In einer vorteilhaften Ausführung des erfindungsgemäßen Verfahrens wird vor dem Antreiben des Werkstückes über das montierte Prüfgegenstück die Zahnlückenweite des Werkstückes ermittelt. Das Prüfgegenstück wird tangential zum Werkstück vershiftet, bis ein Zahnkontakt zwischen Werkstück und Prüfgegenstück feststellbar ist. Die Wegweite dieser Linearbewegung ist ein Indiz für die Zahnlückenweite. Alternativ wird das Werkstück relativ zum Prüfgegenstück bis zum Zahnkontakt verdreht. Anhand des zurückgelegten Drehwinkels kann ebenfalls eine Aussage bezüglich der Zahnlückenweite getroffen werden.

Insbesondere kann durch Auswertung der Lageregelungsparameter der Shiftachse des Prüfgegenstückes bzw. der Drehachse des Werkstückes ein Rückschluß auf Zahnlückenweite gezogen werden.

Das Verdrehflankenspiel des Zahnradpaares gemäß DIN 3975 wird zweckmäßig durch Verdrehen des Prüfgegenstückes um seine Antriebsdrehachse in beide Drehrichtungen bis zum Flankenkontakt bestimmt. Das Verdrehspiel wird bevorzugt anhand der ausgelesenen Lageregelungsparameter der entsprechenden Maschinenachse abgeleitet.

Um ein Abheben der Zahnflanke des Prüfgegenstückes von der Zahnflanke des Werkstückes während des Antreibens des Werkstückes durch das Prüfgegenstück zu vermeiden, ist die Aufbringung eines geringen Bremsmomentes auf das Werkstück zweckmäßig. Das notwendige Bremsmoment wird vorzugsweise durch den Maschinentischantrieb bewirkt.

Wenigstens ein die Wälzabweichung des Werkstückes charakterisierender Wert entspricht der standardisierten Einflankenwälzabweichung für Zahnradpaare gemäß den Normen VDI/VDE 2608, DIN 3960. Die Einflankenwälzabweichung ist die Schwankung der Ist-Drehstellung gegenüber der Referenz-Drehstellung bzw. die Schwankung der Kraftänderung. Sie ergibt sich als Unterschied der größten voreilenden und der größten zurückbleibenden Drehstellungsabweichung bzw. Kraftabweichung gegenüber einem Anfangswert innerhalb einer Umdrehung des zu prüfenden Werkstückes.

Alternativ oder zusätzlich entspricht wenigstens ein die Wälzabweichung des Werkstückes charakterisierender Wert dem Einflankenwälzsprung. Der Wälzsprung ist die maximale Differenz, die bei den Drehstellungsabweichungen innerhalb eines der Dauer eines Zahneingriffs entsprechenden Drehwinkels auftritt. Der Wälzsprung ist analog aus der erfaßten Kraftabweichung zu berechnen.

Ferner besteht die Möglichkeit, dass wenigstens ein die Wälzabweichung des Werkstückes charakterisierender Wert der langwellige Anteil und/oder der kurzwellige Anteil der Einflankenwälzabweichung ist. Der langwellige Anteil wird aus dem bei der Einflankenwälzprüfung erhaltenen Prüfbild durch Berechnung und Einzeichnen eines "ausmittelnden Linienzuges", bei dem die kurzwelligen Anteile unterdrückt sind, ermittelt.

Die kurzwelligen Anteile ergeben sich aus den Unterschieden zwischen der aufgezeichneten Prüfbildlinie und dem "ausmittelnden Linienzug". Die Periodenzahl je Radumfang der kurzwelligen Anteile stimmt normalerweise mit der Zähnezahl des zu prüfenden Werkstückes überein. Diese Anteile können aber auch die Einflüsse von Welligkeiten in den Profil- oder Flanklinien Formabweichungen enthalten.

Die Bestimmung der Werte erfolgt vorzugsweise Software-gesteuert.

Die Ausgabe wenigstens eines der berechneten Werte erfolgt optisch, insbesondere graphisch, mittels eines Anzeigemittels der Verzahnmaschine. Für eine spätere statistische Auswertung innerhalb einer Serienfertigung kann es zweckmäßig sein, ein oder mehrere die Wälzabweichung des Werkstückes charakterisierende Werte zu archivieren.

Zusätzliche Informationen bei der Vermessung des Werkstückes lassen sich aus einer Tragbildprüfung gewinnen. Durch Einfärben einer Flanke des Prüfgegenstückes mit einer Markierfarbe, insbesondere Touchierfarbe, kann als nachfolgender Verfahrensschritt eine Tragbildprüfung des zu überprüfenden Werkstückes durchgeführt werden. Die Auswertung des erfolgten Tragbilds kann entweder manuell durch den Maschinenbediener oder automatisiert mittels eines Bildverarbeitungssystems der Verzahnmaschine erfolgen. Das Einfärben erfolgt vorzugsweise manuell durch den Maschinenbediener, kann aber auch durch einen automatisierten zusätzlichen Verfahrensschritt innerhalb der Verzahnmaschine erfolgen.

In einer bevorzugten Ausführung des erfindungsgemäßen Verfahrens kann durch Modifikation des Schwenkwinkels des Prüfgegenstückes während der Tragbildprüfung/Wälzprüfung der Einfluß einer möglichen Korrektur des Werkzeugschwenkwinkels auf das Tragbild überprüft werden.

Um die Vermessung des produzierten Werkstückes innerhalb der Verzahnmaschine ohne menschliches Zutun ablaufen zu lassen, ist ein vollautomatisierter Werkzeugwechsel innerhalb der Verzahnmaschine möglich. Das bearbeitende Werkzeug, insbesondere ein Fräser, wird durch ein Prüfgegenstück ausgetauscht. Nach der Durchführung des erfindungsgemäßen Verfahrens wird das Prüfgegenstück wieder entnommen und durch das erforderliche Werkzeug ersetzt. Dies ist insbesondere dann sinnvoll, wenn die Auswertung der die Wälzabweichung des Werkstückes charakterisierenden Werte eine Nachbearbeitung des Werkstückes erforderlich macht.

In diesem Zusammenhang kann das erfindungsgemäße Verfahren wenigstens einen Vorschlag für eine erforderliche Nachbearbeitung des vermessenen Werkstückes unterbreiten. Nach Auswahl bzw. Bestätigung ein oder mehrerer Korrekturvorschläge wird die Nachbearbeitung automatisiert innerhalb der Verzahnmaschine ausgeführt. Grundsätzlich kann die Verzahnmaschine den besten Vorschlag selbst auswählen und selbstständig ausführen.

Die Erfindung betrifft ein alternatives Verfahren zum Prüfen eines zu einer Zahnradpaarung gehörigen Werkstückes, wobei die Zahnradpaarung entweder ein Schneckengetriebe oder eine Zylinderradpaarung ist. Erfindungsgemäß wird eine Tragbildprüfung im Anschluß an den Herstellungsprozess des Werkstückes auf der das Werkstück produzierenden Verzahnmaschine ausgeführt wird.

Bisher muss das Werkstück bei bekannten Verzahnmaschinen zur Tragbildprüfung in eine externe Messmaschinen eingespannt werden. Zeigt die Tragbilderstellung ein ungenügendes Ergebnis des Werkstückes bezüglich des Qualitätsstandard, ist eine Rückführung des Werkstückes in die Verzahnmaschine zur Nachbesserung erforderlich. Diese manuell auszuführenden Verfahrensschritte werden so lange wiederholt, bis ein zufriedenstellendes Produktionsergebnis erzielt wird.

Das erfindungsgemäße Verfahren vereinfacht und beschleunigt die oben angesprochene Produktion und Prüfung um ein Vielfaches. Der Maschinenbetreiber bearbeitet das Werkstück, beispielsweise das Schneckenrad, erstellt das Tragbild auf der Verzahnmaschine und kann gegebenenfalls durch Modifikationen der Maschineneinstellungen den Einfluss auf das Tragbild simulieren und anschließend nach dem Austausch der Prüfschnecke gegen das Verzahnwerkzeug gleich mit den geänderten Einstellparametern das Werkstück (Schneckenrad) nachverzahnen. Die gesamte Prozedur Abspannen/Messen/Wiederaufspannen beschränkt sich nun auf den Messzyklus auf der Verzahnmaschine. Es treten folglich auch keine Aufspannfehler aufgrund des Wiederaufspannens auf. Dies kann zu einer höheren Fertigungsqualität führen.

Die vorliegende Erfindung betrifft des weiteren eine Verzahnmaschine zur Bearbeitung und Vermessung eines Werkstückes, insbesondere zur Bearbeitung und Vermessung eines Schneckenrades/Schnecke und/oder Zylinderrades, mit Mitteln zur Durchführung des erfindungsgemäßen Verfahrens nach einer der vorteilhaften Ausführungen gemäß den Ansprüchen 1 bis 16. Zusätzlich oder alternativ könne Mittel zur Durchführung des Verfahrens gemäß Anspruch 17 vorgesehen sein.

Die erfindungsgemäße Verzahnmaschine umfaßt vorzugsweise die erforderlichen Antriebseinheiten zur Ausführung der entsprechenden Prüfgegenstück- bzw. Werkstückbewegungen sowie zweckmäßig entsprechende Antriebsregelungen, die ein Aufzeichnen der erforderlichen Meßwertparameter ermöglichen. Ferner sieht die Verzahnmaschine Berechnungsmittel in Form einer Steuereinheit vor, die eine verfahrensgemäße Ansteuerung der Maschinenachsen vornimmt und in Abhängigkeit der aufgezeichneten Meßparameter mindestens einen Wert, der die Wälzabweichung des eingespannten und vermessenen Werkstückes charakterisiert, berechnet. Ferner sind Mittel, insbesondere eine geeignete Ladevorrichtung wie ein Ringlader, vorgesehen, die einen reversiblen automatischen Wechsel zwischen Werkzeug und Prüfgegenstück zulassen. Darüber hinaus sind Mittel zur Durchführung einer Tragbildprüfung des zu prüfenden Werkstücks in der Verzahnmaschine vorhanden. Die Mittel dienen zur Erstellung des Tragbilds sowie gegebenenfalls zur automatischen Überprüfung bzw. Auswertung des erstellten Tragbilds.

Zur Messung der Verlagerung des Prüfgegenstückes relativ zum Werkstück sowie der Kräfte parallel zur Drehachse des Prüfgegenstückes wirkenden Kräfte kann es vorgesehen sein, dass wenigstens ein Wegaufnehmer und/oder wenigstens ein Federpaket sowie wenigstens eine Druckmeßdose auf oder an dem das Prüfgegenstück aufnehmenden Werkzeugdorn angeordnet sind. Dies ermöglicht ein federbelastetes in Eingriff bringen des Prüfgegenstückes mit dem zu vermessenden Werkzeugstück, wodurch auftretende Kraftschwankungen durch die montierte Druckmeßdose erfaßbar sind. Weiterhin bevorzugt sind Mittel vorgesehen, die die erfaßte Verlagerung bzw. die erfaßten Druck- bzw. Kraftschwankungen aufzeichnen und an die Steuereinheit weiterleiten. Die Meßwerte lassen einen Rückschluß auf die Werkzeug- oder Prüfstückverlagerung bedingt durch Fehler am Gegenrad zu. Geeignet Wegaufnehmer sind bevorzugt direkte Messtaster, induktive Mess-Sensoren, etc..

Weitere Vorteile und Einzelheiten der Erfindung werden im folgenden anhand eines in den Zeichnungen dargestellten Ausführungsbeispiels näher erläutert. Es zeigen:
- Fig.1:: eine perspektivische Seitenansicht der erfindungsgemäßen CNC-Werkzeugmaschine zur Durchführung des Verfahrens,
- Fig. 2:: Meßwertdiagramme des erfindungsgemäßen Verfahrens,
- Figur 3:: ein Tragbild am Schneckenrad und
- Figur 4:: eine schematische Darstellung des Messdorns.

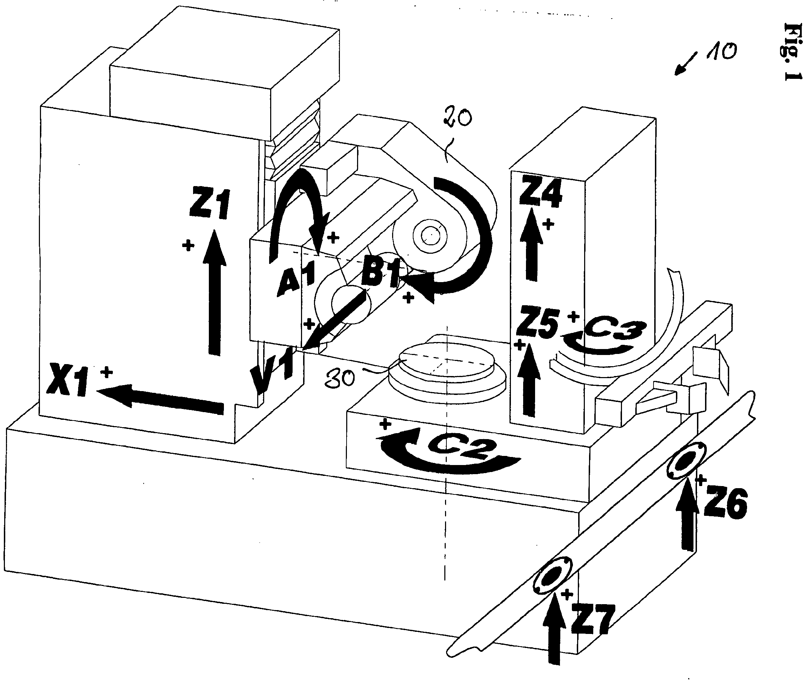

Die Figur 1 zeigt eine Darstellung einer CNC-Verzahnmaschine 10. In der perspektivischen Darstellung der CNC-Verzahnmaschine 10 für die Wälzbearbeitung sind die maschinengesteuerten Bewegungsachsen für die Herstellung und die erfindungsgemäße Vermessung von Werkstücken eingezeichnet. Die Verzahnmaschine weist fünf Standardachsen auf, die sich in die drei Linearachsen X1, Z1, V1 sowie die drei Rotationsachsen A1, B1 und C2 einteilen lassen. Die Rotationsachse A1 dient zum Einschwenken des am Arbeitskopf 20 montierten Werkzeugs, die Rotationsachse B1 ist für die Arbeitsrotationsbewegung des verwendeten Werkzeugs bzw. der Prüfschnecke zuständig, insbesondere des eingespannten Fräsers, und die Rotationsachse C2 bezeichnet die Drehbewegung des in die Werkstückaufnahme des Maschinentischs 30 eingespannten und nicht dargestellten Werkstückes. Die drei Linearachsen X1, Z1 und V1 dienen zur Ausführung einer Radialbewegung (X1) des Werkzeuges, einer Vorschubbewegung (Z1) des Werkzeugs sowie einer Tangentialbewegung (V1) des Werkzeugs.

Erfindungsgemäß erfolgt die Einflankenwälzprüfung eines in der Verzahnmaschine 10 gefertigten Schneckenrades nach Abschluß der erforderlichen Bearbeitungsschritte. Der am Arbeitskopf 20 montierte Fräser wird gegen eine nicht dargestellte Prüfschnecke ausgetauscht. Nachfolgend wird die Prüfschnecke durch Schwenken der A1-Achse in ihre Meßausrichtung verschwenkt. Zur Kompensation thermischbedingter Maschineneinflüsse wird die Prüfschnecke vorab zur exakten Positionsausrichtung mit ihrem Außendurchmesser gegen eine Referenzfläche, wie zum Beispiel eine Spannvorrichtung für Werkstücke, gefahren, wodurch eine hinreichend exakte Referenzposition der Schnecke erfaßt wird.

Im eigentlichen Meßvorgang wird die Prüfschnecke auf Arbeitsachsabstand der Verzahnung des Zahnradpaares aus Prüfschnecke und Schneckenrad, gebracht, indem die Prüfschnecke über die Radialbewegung X1 des Linearschlittens in Richtung des auf dem Maschinentisch 30 eingespannten Schneckenrades gefahren und mit diesem in Eingriff gebracht wird. Prüfschnecke und Schneckenrad befinden sich nunmehr unter realen Bedingungen in Eingriff.

Durch Vershiften des Arbeitskopfes 20 entlang der V1-Achse wird eine Tangentialbewegung der Prüfschnecke gegenüber dem Schneckenrad bewirkt. Anhand der Lageregelungsparameter der Maschinenachse V1 kann das Verdrehflankenspiel des Schneckenrades bestimmt werden.

Alternativ läßt sich die Zahnlückenweite auch durch Verdrehen des Schneckenrades um die vertikal stehende C2-Achse bis zum Zahnkontakt zwischen Prüfschnecke und Schneckenrad bestimmt. Die Berechnung der Zahnlückenweite erfolgt aus den Lageregelungsparametern der C2-Maschinenachse. Das Verdrehflankenspiel des in Eingriff stehenden Zahnradpaares wird durch ein Verdrehen der Prüfschnecke um die B1-Achse in beide Drehrichtungen festgestellt. Die Bestimmung des Verdrehflankenspiels erfolgt anhand der Lageregelparameter der B1-Achse.

Während des erfindungsgemäßen Verfahrens wird die Prüfschnecke über den Direktantrieb des Arbeitskopfes 2 um die Achse B1 in Rotation versetzt und an die Arbeitsflanke des zu prüfenden Schneckenrades angelegt. Die Bewegung der Prüfschnecke bewirkt eine Rotationsbewegung des Schneckenrads bzw. des Maschinentischs 30 um die Drehachse C2. Die ausgewählte Drehrichtung der Prüfschnecke definiert die zu untersuchende Arbeitsflanke, d.h. die Rechts- und Linksflanke des Schneckenrads.

Um ein Abheben der Zahnflanke der Prüfschnecke von der Schneckenradflanke zu vermeiden, wird vom Tischmotor ein geringes Bremsmoment aufgebracht, das der rotierenden Bewegung um die Drehachse C2 entgegenwirkt. Gleichzeitig erfolgt über das Meßsystem des Maschinentischs 30 die Aufzeichnung der eingenommenen Drehposition. Die Steuersoftware der Verzahnmaschine 10 stellt einen elektronischen Vergleich der tatsächlich erfaßten Ist-Position des Maschinentischs 30 mit einer hinterlegten idealen Sollposition an und erhält somit die auftretende Drehstellungsabweichung. In der Regel wird die Drehstellungsabweichung pro Zahn des zu prüfenden Schneckenrades innerhalb einer vollständigen Umdrehung bestimmt. Davon ausgehend können diverse Werte, nämlich die Einflankenwälzabweichungen des Zahnradpaares berechnet werden.

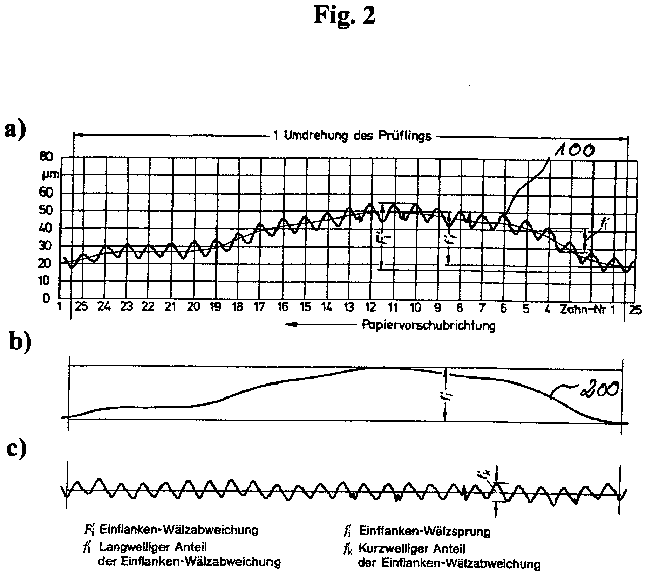

Figur 2 zeigt drei Meßwertdiagramme, die von der Maschinensteuerung für die Bestimmung der Einzelabweichungen herangezogen werden. Die in Figur 2a dargestellte Prüfbildlinie 100 zeigt die erfaßte Drehstellungsabweichung des betriebenen Zylinderpaares pro Zahnnummer des Prüflings. Der Prüfling weist im dargestellten Meßwertdiagramm über eine vollständige Umdrehung 25 Zähne auf.

Die eingezeichnete Einflankenwälzabweichung F'ᵢ ist die Schwankung der Ist-Drehstellung gegenüber der idealen Soll-Drehstellung. Diese ergibt sich aus der Differenz der größten voreilenden und der größten zurückbleibenden Drehstellungsabweichung gegenüber einem definierten Anfangswert innerhalb einer Umdrehung des zu prüfenden Schneckenrades. Im dargestellten Meßwertdiagramm fällt der gewählte Anfangswert auf die Zahnlücke zwischen dem ersten und letzten Zahn des Schneckenrades.

Der gekennzeichnete Einflankenwälzsprung f'ᵢ ist die größtmögliche auftretende Differenz zwischen zwei Drehstellungsabweichungen, die bei einem Zahneingriff innerhalb der Dauer des entsprechenden Drehwinkels auftritt.

Weiterhin wird zur Charakterisierung des zu vermessenden Schneckenrades ein langwelliger Anteil f'ₗ und ein kurzwelliger Anteil f'ₖ der Einflankenwälzabweichung bestimmt. Der langwellige Anteil f'ₗ kann aus dem dargestellten Prüfbild in Fig. 2b durch Berechnen und Einzeichnen des "ausmittelnden Linienzuges" 200, bei dem die kurzwelligen Anteile der Drehstellungsabweichungen unterdrückt sind, ermittelt werden. Eine bereinigte Darstellung des "ausmittelnden Linienzuges" 200 ist der Fig. 2b zu entnehmen.

Der kurzwellige Anteil f'ₖ (Figur 2c) der Einflankenwälzabweichung berücksichtigt demgegenüber nur den kurzwelligen Anteil der erfaßten Drehstellungsabweichung. Diese Anteile ergeben sich aus den Unterschieden zwischen der aufgezeichneten Prüfbildlinie 100 und dem "ausmittelnden Linienzug" 200. Die Periodenzahl je Radumfang der kurzwelligen Anteile stimmt normalerweise mit der Zähnezahl des Prüflings überein. Diese Anteile können aber auch die Einflüsse von den Profilen oder Flankenlinienformabweichungen enthalten.

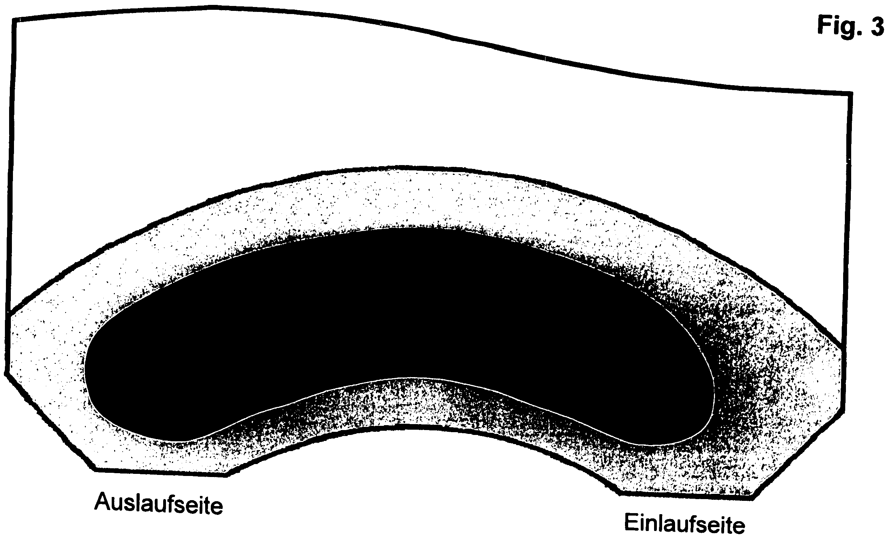

Zusätzliche Informationen lassen sich aus der Einflankenwälzprüfung gewinnen, wenn sie mit einer Tragbildprüfung kombiniert wird. Dabei wird die am Arbeitskopf 20 montierte Prüfschnecke mit einer Markierfarbe, auch als Touchierfarbe bezeichnet, manuell oder maschinengesteuert eingefärbt und im Anschluß eine bekannte Tragbildprüfung durchgeführt. Das erstellte Tragbild, wie es beispielsweise der Figur 3 zu entnehmen ist, kann entweder vom Maschinenbediener manuell begutachtet und ausgewertet werden oder alternativ durch ein in die Steuerungseinheit der CNC-Maschine 10 integriertes Bildverarbeitungssystem vollautomatisch ausgewertet werden. Die Integration der Tragbildprüfung lässt die Beurteilung der Kontaktverhältnisse während der Drehübertragung zu. Insbesondere bei Schneckenradpaarungen ist die Tragbildkontrolle ein probates Mittel zur erweiterten Überwachung der Fertigungsqualität.

Ein automatischer Werkzeugwechsel erlaubt den automatischen und reversiblen Austausch zwischen Fräser und Prüfschnecke. Mit Hilfe einer geeigneten Ladevorrichtung, zum Beispiel einem Ringlader, kann die Prüfschnecke vollautomatisch in die Maschine geladen und/oder innerhalb der Maschine aufbewahrt werden. Der automatische Wechsel ermöglicht die Verfahrensanwendung innerhalb der Serienfertigung von Zahnrädern.

Sollten bei den Messungen Abweichungen festgestellt werden, kann das Schneckenrad, nach dem Austausch der Prüfschnecke gegen den Schneckenfräser, sofort korrigiert und anschließend wiederholt ausgemessen werden.

Die vorgestellte Art der Überprüfung ist vor allem bei Maschinen mit Direktantrieben in der B1- und C2-Achse geeignet, kann aber gegebenenfalls auch bei Verzahnmaschinen mit Getriebetischen bzw. Getriebeköpfen Einsatz finden.

In einer zweiten Ausgestaltung des Verfahrens können aber auch Maschinen mit herkömmlichen Achsantrieben zur Durchführung des erfindungsgemäßen Verfahrens eingesetzt werden. Gemäß dieser Ausführung wird das in die Werkzeugaufnahme eingespannte Schneckenrad ebenfalls über die vorgesehen Prüfschnecke angetrieben.

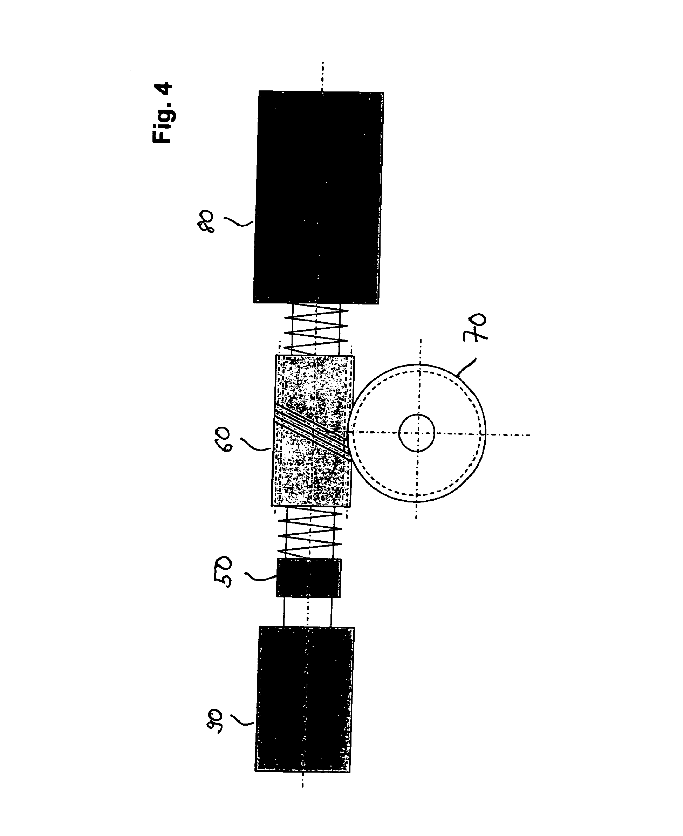

Die Prüfschnecke ist entweder auf einem vorgesehenen Sonderfräsdorn oder aber auf dem Arbeitsdorn montiert, wobei anordnungsunabhängig eine Rotation der Prüfschnecke um die B1-Achse erzeugt wird. Eine schematische Darstellung des Messodorns ist der Figur 4 zu entnehmen.

Auf dem mittels des Hauptlagers 80 und Gegenlager 90 gelagerten Sonderfräsdorn ist neben der Prüfschnecke 60 ein Mess-System 50 in Form einer Druckmeßdose angeordnet. Die Prüfschnecke 60 wird federbelastet gegen das Schneckenrad 70 gedrückt und mit konstanter Drehzahl um die B1-Achse angetrieben, wodurch das Schneckenrad 70 um die Achse C2 rotiert. Schwankungen in der Wälzabweichung des Zahnradpaares 60, 70 führen zu einer Verlagerung des Prüfgegenstückes 60 relativ zum Werkstück 70 und folglich zu einer Änderung der auf die Prüfschnecke 60 aufgebrachten Kräfte, die in Richtung ihrer Schneckenachse (V1) wirken. Je nach Kraftrichtung wird die Druckmeßdose entlastet bzw. zusätzlich belastet. Das ausgegebene Signal dient als Referenzsignal zur Ermittlung von Wälzabweichungen. Durch das bekannte Übersetzungsverhältnis können dann daraus ebenfalls die Meßwerte für die Einflankenwälzprüfung berechnet werden. Das vorgestellte Verfahren kommt insbesondere dann zur Anwendung, wenn die ausführende Verzahnmaschine einen großen und besonders schwergängigen Getriebemotor im Maschinentisch 30 aufweist.

Alternativ kann die Verlagerung des Prüfgegenstückes 60 relativ zum Werkstück 70 durch ein am Sonderfräsdorn angeordnetes Mess-System 50 in Form eines Wegaufnehmers, beispielsweise eines Messtasters oder eines induktiven Mess-Sensors, direkt bestimmt werden. In diesem Fall kann die Druckmeßdose entfallen.

In einer dritten Ausführung des erfindungsgemäßen Verfahrens wird die Prüfschnecke auf dem Fräsdorn montiert. Wälzabweichungen beim Zusammenspiel der Prüfschnecke mit dem Schneckenrad wirken sich in Form von Kraftänderungen in Richtung der Maschinenachse V1 aus. Der die V1-Achse antreibende Motor muß die Maschinenachse während des Betriebs in ihrer Lage regeln. Die Größe und Richtung der Lageregelung bzw. des erforderlichen Lageregelmomentes wird als Signal für die zu messende Wälzabweichung ausgewertet.

Bei einer optionalen Tragbildprüfung mittels Markierfarbe können zusätzlich durch die Modifikation des Schwenkwinkels der A1-Achse die Einflüsse einer möglichen Korrektur des Fräserschwenkwinkels auf das Tragbild geprüft werden.

Für die zweite und dritte Ausführung des Verfahrens werden analog zur ersten Ausführung die Einflankenwälzabweichung F'ᵢ, der Einflankenwälzsprungs f'ᵢ, sowie der langwellige und kurzwellige Anteil f'ₗ, f'ₖ der Einflankenwälzabweichungen aus den Kraftabweichungen berechnet. Eine optionale Tragbildprüfung sowie der automatische Werkzeugwechsel mit nachfolgenden Korrekturvorschlägen und Nachbearbeitung ist ebenso Bestandteil der zweiten und dritten Ausführung des erfindungsgemäßen Verfahrens.

Die zweite und dritte Ausführung laufen wälzgekoppelt ab. Die Abweichung in der Drehübertragung erzeugt eine Verlagerung des Prüfgegenstückes bzw. indirekt eine Kraftänderung auf das Prüfgegenstück in einer bestimmten Richtung (voreilend/nacheilend). Daraus läßt sich ein Mess-Signal generieren, welches Auskunft über die Übertragungsgleichförmigkeit gibt. In der dritten Ausführung des Verfahrens muss der V1-Achsenmotor die V1-Achse in ihrer Lage konstant halten (F=const). Die hierfür notwendigen Regelsignale liefern das Mess-Signal.

In der ersten Ausführung des Verfahrens ist keine Wälzkopplung im Sinne einer Lageregelung möglich. Hier wird durch das Prüfgegenstück eine Drehbewegung vorgegeben und die Abweichung von der idealen Drehübertragung wird als Meßergebnis gewonnen und mit der theoretisch idealen Drehübertragung verglichen.

Die voranstehend erläuterten Ausführungen beschäftigen sich mit der Vermessung von Schneckenrädern. Die Verfahrensausführung ist jedoch ohne Weiteres in analoger Weise auf die Vermessung von Schnecken mit einem Prüfschneckenrad anzuwenden. Gleichfalls können andere Zahnradpaare, wie Zylinder- bzw. Stirnräder, untersucht werden.

## Patentansprüche

1. Verfahren zum Vermessen und Prüfen eines zu einer Zahnradpaarung gehörigen Werkstückes, wobei das Verfahren auf einer das Werkstück produzierenden Verzahnmaschine ausgeführt wird und die Zahnradpaarung entweder ein Schneckengetriebe oder eine Zylinderradpaarung ist, mit den Verfahrensschritten:
a. Verfahren des am Arbeitskopf, insbesondere Fräskopf, montierten Prüfgegenstückes in Richtung des in der Werkstückaufnahme des Maschinentisches eingespannten Werkstückes und/oder Verfahren der Werkstückaufnahme in Richtung des Arbeitskopfes, bis die Zahnradpaarung in Eingriff ist und idealerweise der entsprechende Arbeitsachsabstand erreicht ist,
b. Antreiben des Werkstückes um seine Werkstückdrehachse über die Drehantriebsbewegung des Prüfgegenstückes der Zahnradpaarung,
c. Aufzeichnen der Drehposition des zu vermessenden Werkstückes, und
d. Vergleich der erfaßten Istposition mit einer Referenzposition und Berechnung wenigstens eines die Wälzabweichung des Werkstückes charakterisierenden Wertes unter Berücksichtigung des angestellten Vergleichs.

2. Verfahren zum Vermessen und Prüfen eines zu einer Zahnradpaarung gehörigen Werkstückes, wobei das Verfahren auf einer das Werkstück produzierenden Verzahnmaschine ausgeführt wird und die Zahnradpaarung entweder ein Schneckengetriebe oder eine Zylinderradpaarung ist, mit den Verfahrensschritten:
a. Verfahren des am Arbeits- oder Sonderdorn montierten Prüfgegenstückes in Richtung des in der Werkstückaufnahme des Maschinentisches eingespannten Werkstückes und/oder Verfahren der Werkstückaufnahme in Richtung des Arbeits- oder Sonderdorn, bis die Zahnradpaarung in Eingriff ist und idealerweise der entsprechende Arbeitsachsabstand erreicht ist,
b. Antreiben des Werkstückes um seine Werkstückdrehachse über die Drehantriebsbewegung des Prüfgegenstückes der Zahnradpaarung,
c. Aufzeichnen der Verlagerung des Prüfgegenstückes relativ zum Werkstück und,
d. Berechnung wenigstens eines die Wälzabweichung des Werkstückes charakterisierenden Wertes in Abhängigkeit der aufgezeichneten Verlagerung, vorzugsweise unter Berücksichtigung des bekannten Übersetzungsverhältnisses.

3. Verfahren nach Anspruch 2, wobei die Verlagerung des Prüfgegenstückes relativ zum Werkstück aus der durch das Werkstück auf das Prüfgegenstück übertragenen Kraft oder Kräfte, die parallel zur Achsrichtung des Prüfgegenstückes wirken, abgeleitet wird, wobei die Kraftänderungen vorzugsweise mittels einer am Sonderdorn befestigten Kraftmeßdose ermittelt werden und/oder anhand des Lageregelmomentes der entsprechenden Achse des Arbeitsdorns bestimmt wird, wobei vorzugsweise die Verlagerung des Prüfgegenstückes mittels eines am Sonderdorn oder Bearbeitungskopf befestigten Wegaufnehmers, insbesondere direkter Messtaster und/oder induktiver Mess-Sensor, ermittelt wird.

4. Verfahren nach Anspruch 1, wobei das Verfahren zusätzlich die Verfahrenschritte nach einem der Ansprüche 2 oder 3 umfasst.

5. Verfahren nach einem der vorhergehenden Ansprüche, wobei in einem weiteren Verfahrensschritt eine Referenzfläche mit dem Außendurchmesser des Prüfgegenstückes angefahren wird, um thermische Maschineneinflüsse zu kompensieren.

6. Verfahren nach einem der vorhergehenden Ansprüche, wobei vor dem Antreiben des Werkstückes dessen Zahnlückenweite ermittelt wird, indem das Prüfgegenstück tangential zum Werkstück vershiftet und/oder das Werkstück gegenüber dem Prüfgegenstück um seine Werkstückdrehachse verdreht wird, bis ein Zahnkontakt zwischen Werkstück und Prüfgegenstück feststellbar ist und wobei vorzugsweise der Zahnkontakt durch Überwachung der Lageregelungsparameter der entsprechenden Maschinenachsen festgestellt wird.

7. Verfahren nach einem der vorhergehenden Ansprüche, wobei vor dem Antreiben des Werkstückes das Verdrehspiel des Zahnradpaares ermittelt wird, indem das Prüfgegenstück um seine Drehantriebsachse in zwei Richtungen verdreht wird, bis ein Zahnkontakt zwischen Werkstück und Prüfgegenstück feststellbar ist und wobei vorzugsweise der Zahnkontakt durch Überwachung der Lageregelungsparameter der entsprechenden Maschinenachsen festgestellt wird.

8. Verfahren nach einem der vorhergehenden Ansprüche, wobei auf das Werkstück ein geringes Bremsmoment aufgebracht wird, um ein Abheben der Zahnflanke des Prüfgegenstückes von der Zahnflanke des Werkstückes zu vermeiden.

9. Verfahren nach einem der vorhergehenden Ansprüche, wobei wenigstens ein die Wälzabweichung des Werkstückes charakterisierender Wert die Einflanken-Wälzabweichung des Zahnradpaares und/oder der EinflankenWälzsprung des Zahnradpaares und/oder der langwellige und/oder kurzweilige Anteil der Einflanken-Wälzabweichung des Zahnradpaares ist.

10. Verfahren nach einem der vorhergehenden Ansprüche, wobei wenigstens einer der die Wälzabweichung des Werkstückes charakterisierender Werte optisch, insbesondere graphisch, ausgegeben wird und/oder innerhalb einer Serienfertigung für eine nachfolgende statistische Auswertung archiviert wird.

11. Verfahren nach einem der vorhergehenden Ansprüche, wobei in einem nachfolgenden Verfahrenschritt eine Tragbildprüfung des Werkstückes durchgeführt wird, wobei das Tragbild manuell und/oder vorzugsweise durch eine Bilderkennung ausgewertet wird und wobei vorzugsweise durch Modifikation des Schwenkwinkels des Prüfgegenstückes während der Tragbildprüfung der Einfluß einer möglichen Korrektur des Werkzeugschwenkwinkels auf das Tragbild geprüft wird.

12. Verfahren nach einem der vorhergehenden Ansprüche, wobei ein vollautomatischer Werkzeugwechsel in der Verzahnmaschine zwischen Werkzeug und Prüfgegenstück vor und/oder nach Beendigung der Vermessung erfolgt.

13. Verfahren nach einem der vorhergehenden Ansprüche, wobei wenigstens ein Korrekturvorschlag für eine Nachbearbeitung des vermessenen Werkstückes in Abhängigkeit wenigstens eines der berechneten Werte unterbreitet wird und/oder eine automatisierte Nachbearbeitung des Werkstückes in Abhängigkeit wenigstens eines der berechneten Werte erfolgt.

14. Verfahren zum Prüfen eines zu einer Zahnradpaarung gehörigen Werkstückes, wobei die Zahnradpaarung entweder ein Schneckengetriebe oder eine Zylinderradpaarung ist, **dadurch gekennzeichnet, dass** eine Tragbildprüfung im Anschluß an den Herstellungsprozess des Werkstückes auf der das Werkstück produzierenden Verzahnmaschine ausgeführt wird.

15. Verzahnmaschine zur Bearbeitung und Vermessung eines Werkstückes, insbesondere zur Bearbeitung und Vermessung eines Schneckenrades/Schnecke und/oder eines Zylinderrades, mit Mitteln zur Durchführung des Verfahrens nach einem der Ansprüche 1 bis 13 und/oder mit Mitteln zur Durchführung des Verfahrens gemäß Anspruch 14, wobei vorzugsweise das Prüfgegenstück auf einem Werkzeugdorn zwischen wenigstens einem Federpaket und wenigstens einer Druckmeßdose angeordnet ist, wobei Mittel zur Aufzeichnung der durch die Druckmeßdose erfaßten Druckschwankungen vorgesehen sind und wobei besonders vorzugsweise am Sonderdorn bzw. am Bearbeitungskopf eine Wegmesseinrichtung angeordnet ist, wobei Mittel zur Aufzeichnung der durch die Wegmesseinrichtung erfaßten Verlagerung des Prüfgegenstückes relativ zum Werkstück vorgesehen sind.
